Europäisches Patentamt

European Patent Office

Office européen des brevets

(19)

(11) **EP 0 543 445 B1**

(12) **FASCICULE DE BREVET EUROPEEN**

(45) Date de publication et mention
de la délivrance du brevet:
**21.10.1998 Bulletin 1998/43**

(51) Int Cl.⁶: **G10K 11/34**

(21) Numéro de dépôt: **92203454.1**

(22) Date de dépôt: **11.11.1992**

(54) **Appareil d'examen de milieux par échographie ultrasonore**

Untersuchungsgerät von Medien mittels Ultraschall-Echographie

Examination device for media by means of ultrasonic echography

(84) Etats contractants désignés:
**DE FR GB**

(30) Priorité: **18.11.1991 FR 9114175**

(43) Date de publication de la demande:
**26.05.1993 Bulletin 1993/21**

(73) Titulaires:
• **LABORATOIRES D'ELECTRONIQUE PHILIPS
S.A.S.
94450 Limeil-Brévannes (FR)**
Etats contractants désignés:
**FR**
• **Koninklijke Philips Electronics N.V.
5621 BA Eindhoven (NL)**
Etats contractants désignés:
**DE GB**

(72) Inventeurs:
• **Mallart, Raoul
F-75008 Paris (FR)**
• **Fink, Mathias
F-75008 Paris (FR)**

(74) Mandataire: **Landousy, Christian
Société Civile S.P.I.D.
156, Boulevard Haussmann
75008 Paris (FR)**

(56) Documents cités:
**DE-A- 3 413 074          US-A- 4 815 043**

• '82 ULTRASONICS SYMPOSIUM PROCEEDINGS
vol. 2, 27 Octobre 1982, SAN DIEGO CA US pages
821 - 825 B.B. LEE ET AL. 'Golay codes for
simultaneous multi-mode operation in phased
arrays'

**Description**

La présente invention telle qu'elle est définie dans les revendications concerne un appareil d'examen de milieux par échographie ultrasonore comprenant un réseau de n transducteurs ultrasonores associé à un étage d'émission des signaux d'exploration du milieu et à un étage de réception et traitement des signaux échographiques renvoyés vers lesdits transducteurs par les obstacles rencontrés dans le milieu exploré. Cette invention est utilisable notamment dans le domaine médical, par exemple en échographie du coeur, mais est également applicable à l'analyse de milieux autres que les tissus biologiques, par exemple pour le contrôle non destructif de matériaux de types très variés.

La demande de brevet européen EP-0323668 décrit un appareil de ce type, dans lequel un compromis intéressant est réalisé entre la cadence de fonctionnement et la résolution. La solution décrite consiste à émettre successivement, mais de façon aussi rapprochée que possible, m faisceaux ultrasonores focalisés dans m directions différentes, la réception et le traitement des signaux échographiques formés étant alors assurés par des moyens déjà connus de focalisation simultanée des m faisceaux ultrasonores revenant de ces m directions (ces moyens connus sont décrits par exemple dans l'article de O.T. von Ramm, S.W. Smith et H.E. Pavy, "High-speed ultrasound volumetric imaging system, Part II : Parallel processing and image display", IEEE Trans. on UFFC, vol.38, n°2, mars 1991, pp. 109-115). Avec cet appareil, il est cependant nécessaire d'attendre que toutes les émissions successives soient terminées avant de pouvoir commencer à recevoir les signaux échographiques renvoyés vers les transducteurs (cette séquence d'émission dure un temps égal à la somme des retards maximum qui correspondent à chaque loi de focalisation des faisceaux émis). On ne peut en effet émettre et recevoir simultanément avec un transducteur. Ces contraintes de temps d'une part imposent de limiter le nombre de faisceaux émis et d'autre part conduisent à exclure de la zone à explorer une certaine épaisseur de milieu, une sorte de zone morte correspondant à la partie du milieu la plus proche du réseau de transducteurs.

Le but de l'invention est de proposer un appareil d'examen de milieux par échographie ultrasonore s'affranchissant dans une large mesure de ces limitations.

A cet effet, l'appareil selon l'invention est, dans une première forme de réalisation, caractérisé en ce que ledit étage d'émission comprend des moyens de focalisation de m faisceaux ultrasonores émis simultanément, sous la forme de n modules d'émission comprenant eux-mêmes chacun, et par exemple le i-ième, m générateurs de signaux en parallèle correspondant à des fronts d'onde sphériques même amplitude, un étage de combinaison des m signaux ainsi engendrés pour la superposition de m lois de focalisation distinctes, et un amplificateur prévu pour fournir le signal combiné amplifié au transducteur correspondant au module d'émission considéré, ou bien, dans une deuxième forme de réalisation, caractérisé en ce que ledit étage d'émission comprend des moyens de focalisation de m faisceaux ultrasonores émis simultanément, sous la forme de n modules d'émission comprenant eux-mêmes chacun un générateur de signal, suivi, pour la superposition de m lois de focalisation distinctes à partir d'un signal correspondant à un front d'onde sphérique d'amplitude déterminée, de m circuits à retard en parallèle, un étage de combinaison des m signaux ainsi engendrés, et un amplificateur prévu pour fournir le signal combiné amplifié au transducteur correspondant au module d'émission considéré.

Pour faire mieux comprendre l'efficacité de la structure ainsi proposée, il faut imaginer dans le milieu d'exploration considéré deux obstacles réflecteurs, de réflectivité R1 et R2 respectivement, situés à égale distance du réseau émetteur. Lorsque de tels réflecteurs reçoivent une impulsion ultrasonore se propageant comme une onde plane, deux signaux, ou échos, d'amplitude proportionnelles à R1 et R2 sont renvoyés vers le réseau émetteur. Si l'on stocke alors, par exemple dans une mémoire numérique, le signal-écho reçu par chaque élément transducteur de ce réseau et qu'on lit simultanément, à la manière d'une mémoire FIFO (First-In, First-Out), lesdites mémoires correspondant à chaque élément (selon un processus qu'on peut qualifier de réversibilité temporelle), ces éléments transducteurs peuvent être ré-excités par les mêmes échos mais ayant subi une inversion temporelle. Ce mode d'excitation du réseau produit à l'évidence, du fait de la réversibilité, deux faisceaux simultanés, d'amplitudes identiques aux précédentes et toujours proportionnelles à R1 et R2, dont la focalisation s'opère sur les deux réflecteurs considérés initialement.

L'analyse des opérations effectuées ci-dessus conduit à deux remarques. D'une part les échos reçus par les éléments transducteurs du réseau et stockés par les mémoires forment simplement, du fait de la linéarité de tous les phénomènes ultrasonores ou électroniques impliqués (transduction, propagation, diffraction, conversion analogique-numérique,...), la somme de deux fronts d'onde sphériques centrés sur les deux réflecteurs. D'autre part, des itérations successives du processus réversible décrit ci-dessus font apparaître à chaque fois deux faisceaux ultrasonores, et, au bout de la n-ième itération, les deux faisceaux ont des amplitudes proportionnelles respectivement à $R_1^n$ et $R_2^n$. Pour n suffisamment grand, si par exemple $R_1$ est plus grand que $R_2$ (ou réciproquement), l'amplitude du second faisceau (ou respectivement, du premier faisceau) devient négligeable et il ne subsiste plus qu'un faisceau se focalisant sur le réflecteur correspondant. Au contraire, si $R_1$ et $R_2$ sont des coefficients égaux, les deux fronts d'onde conservent rigoureusement la même amplitude : on en déduit que la condition à réaliser pour pouvoir obtenir une transmission simultanée de deux faisceaux est que les signaux d'excitation correspondent à la somme de deux fronts d'onde sphérique de même amplitude.

Cette conclusion des deux remarques précédentes peut être généralisée au cas d'un nombre quelconque de faisceaux : la condition suffisante pour réaliser une transmission simultanée de m faisceaux est que les signaux d'excitation correspondent à la somme de m fronts d'onde sphériques de même amplitude. Dans le cas d'un seul faisceau, le signal d'excitation requis - à savoir un front d'onde sphérique, centré sur le réflecteur ou un point focal souhaité- est constitué par une famille d'impulsions ultrasonores à retard sphérique telle que fournie par les systèmes actuels d'échographie ultrasonore à ouverture (en général, à l'aide d'un générateur d'impulsions et d'un jeu de lignes à retard en nombre égal à celui des éléments transducteurs à exciter chacun par une impulsion individuelle). De même, dans le cas de m faisceaux, le signal d'excitation global de la structure transductrice -à savoir m fronts d'onde sphériques de même amplitude centrés sur m points focaux- est obtenu par la sommation linéaire de m familles similaires d'impulsions à retard sphérique orientées vers le point focal correspondant, c'est-à-dire de m familles associées chacune à une loi de retard spécifique permettant la focalisation du faisceau concerné sur l'un des m points focaux.

Grâce à une telle structure transductrice, la durée d'émission peut être ramenée à une valeur égale au plus grand des retards associés à chacune des m lois de retards de focalisation considérées, ce qui permet d'augmenter la cadence de fonctionnement et, en même temps, de réduire la profondeur de la zone morte exclue de l'exploration, ou bien, à profondeur constante, d'augmenter le nombre m des faisceaux pouvant être émis.

La demande de brevet européen EP-0335578 décrit, certes, un système d'imagerie ultrasonore comprenant des moyens de focalisation de faisceaux ultrasonores émis simultanément. Ces émissions simultanées proviennent cependant de deux (ou plusieurs) ouvertures acoustiques distinctes simultanément actives, constituant en fait, par rapport à la totalité du réseau de transducteurs ultrasonores élémentaires, autant de sous-réseaux indépendants, et auxquels ne sont pas nécessairement affectés, bien au contraire, des directions totalement indépendantes les unes des autres. Dans le cas présent, il ne s'agit pas d'utiliser des groupes de transducteurs quasi-indépendants, mais au contraire de faire participer la totalité d'une même ouverture acoustique à la focalisation de m faisceaux émis simultanément dans m directions différentes. Ce résultat est obtenu par la superposition, sur les mêmes transducteurs élémentaires, de m lois de focalisation distinctes, l'étage d'émission qui autorise cette émission simultanée pouvant revêtir notamment les deux formes de réalisation précisées ci-dessus et décrites plus en détail ci-dessous.

Pour réaliser cette émission simultanée, l'étage de combinaison dudit étage d'émission peut être, dans un premier mode de réalisation, un sommateur à m entrées, les n amplificateurs étant à amplification continue dans toute la gamme dynamique concernée. Dans un autre mode de réalisation de l'appareil, cet étage émet non plus la somme exacte des m signaux, mais une combinaison plus simple qui constitue une approximation de cette somme exacte souhaitée. Ce signal combiné est obtenu par exemple à l'aide d'un circuit OU-logique, les n amplificateurs pouvant alors n'être qu'à deux niveaux de sortie.

La communication "Golay codes for simultaneous multi-mode operation in phased arrays", 1982 Ultrasonics Symposium, vol. 2, 27-10-82, San Diego CA-US, pp. 821-825, décrit, elle, un système de transmission ultrasonore simultanée de faisceaux sans lobes latéraux, opérant à partir d'une seule source de signal et en faisant appel à des codes Golay appariés, ou complémentaires, pour obtenir de tels faisceaux. Cette solution est cependant plus complexe que celle proposée ici, et, par ailleurs, ne semble pas pouvoir être généralisée à un nombre m quelconque de faisceaux.

Les particularités de l'invention apparaîtront maintenant de façon plus précise dans la description qui suit et dans les dessins annexés, donnés à titre d'exemples non limitatifs et dans lesquels :

- la figure 1 montre, de façon très schématique, la structure d'un échographe ultrasonore selon l'invention ;
- les figures 2 et 3 montrent, dans un appareil tel que celui de la figure 1, deux exemples de réalisation d'un des modules d'émission d'un étage d'émission conforme à l'invention ;
- la figure 4 montre une variante de réalisation à l'intérieur de chacun des modules d'émission de la figure 2 ou de la figure 3.

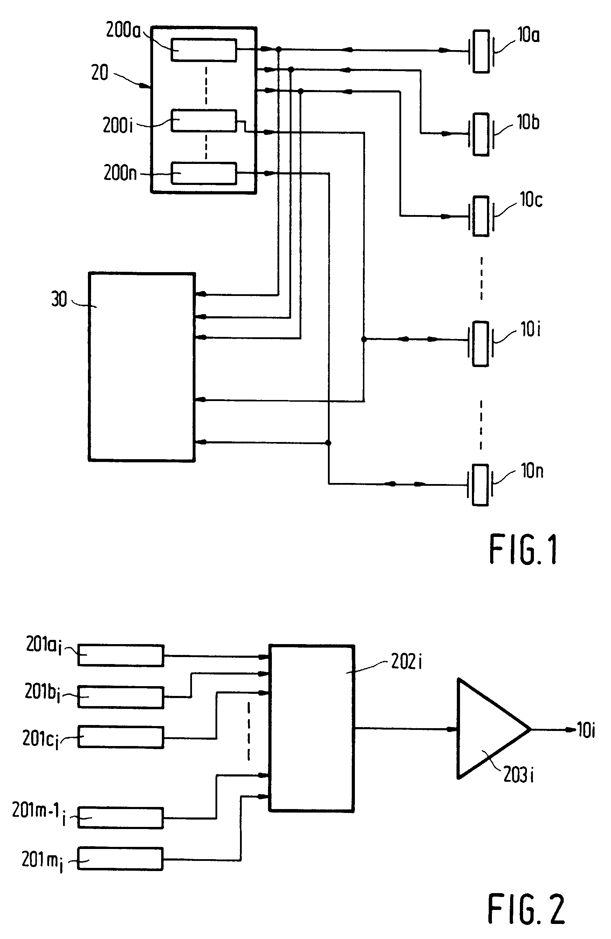

Un appareil d'examen de milieux par échographie ultrasonore selon l'invention comprend, comme indiqué sur la figure 1, une structure transductrice composée ici d'un réseau de n transducteurs ultrasonores 10a, 10b, 10c,..., 10 i,...,10n. A ce réseau sont associés d'une part un étage 20 d'émission de signaux ultrasonores vers le milieu à explorer et d'autre part un étage 30 de réception et traitement des signaux échographiques renvoyés vers les transducteurs 10a à 10n par les divers obstacles que les signaux émis ont rencontrés dans ledit milieu.

L'étage d'émission 20 comprend ici, conformément à l'invention, n modules d'émission 200a, ...., 200i,..., 200n (avec par exemple n = 64). Ces n modules comprennent eux-mêmes chacun, et par exemple le i-ième, qui est représenté sur la figure 2, m générateurs de signaux impulsionnels $201a_i$ à $201m_i$, m étant le nombre de faisceaux que l'on veut émettre dans m directions distinctes (des essais ont été effectués par exemple avec m = 5). Dans ce i-ième module d'émission, les m générateurs $201a_i$ à $201m_i$ sont en parallèle et leurs m sorties constituent les entrées en parallèle d'un étage 202i de combinaison des m signaux ainsi engendrés. Un amplificateur 203i est enfin prévu pour fournir le signal combiné amplifié au transducteur correspondant au module d'émission considéré.

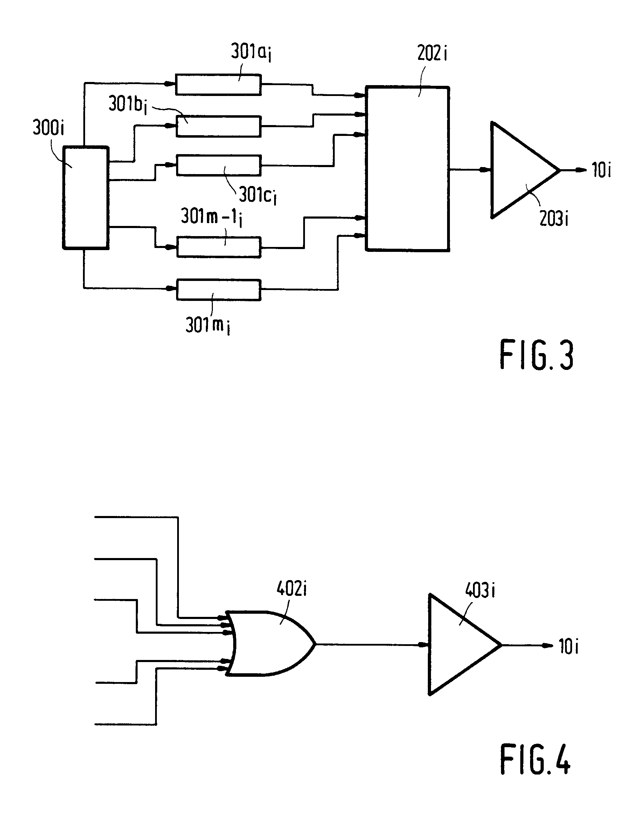

Les phénomènes ultrasonores considérés étant linéaires, la structure d'étage d'émission ci-dessus décrite permet d'émettre simultanément la somme des m signaux qui, pris individuellement, correspondraient à une émission dans chacune des m directions considérées. On joue pour cela sur le mode d'excitation de chaque transducteur et donc sur l'instant de déclenchement de chacun des m générateurs de chaque module 200a à 200n pour réaliser une loi de retard complexe qui est, selon le principe de linéarité rappelé, la somme des lois de retard élémentaires correspondant à une émission distincte dans le temps, dans lesdites m directions. Le même résultat peut être obtenu, comme le montre la variante de module d'émission représentée sur la figure 3, en remplaçant dans chacun des n modules les m générateurs $201a_i$ à $201m_i$ par un générateur unique 300i suivi de m circuits de retard $301a_i$, $301b_i$, $301c_i$,..., $301m-1_i$, $301m_i$.

Dans le mode de réalisation qui vient d'être décrit, les n étages de combinaison, dont seul le i-ième est représenté, sont des sommateurs à m entrées, et le signal combiné amplifié de sortie délivré vers chaque transducteur correspond exactement au signal résultant théoriquement de la combinaison des m lois d'émission voulues.

Un résultat technique comparable peut, dans le cadre de la présente invention, être obtenu en adoptant une structure d'étage de combinaison modifiée, dans laquelle les éléments 202i et 203i sont remplacés par des éléments 402i et 403i représentés sur la figure 4. On peut en effet se contenter de fournir à chaque transducteur un signal combiné amplifié qui n'est qu'une approximation du précédent, en émettant non plus le signal somme exact mais un signal approché obtenu en sortie d'un étage de combinaison 402i qui est cette fois un circuit OU-logique. Ce circuit OU-logique de chaque module est placé en sortie des m générateurs $201a_i$ à $201m_i$ (ou, selon le cas, des m circuits à retard $301a_i$ à $301m_i$ placés en parallèle en sortie du générateur unique 300i) et délivre un signal combiné qui est actif lorsqu'au moins un des signaux de sortie des m générateurs $201a_i$ à $201m_i$ (ou, selon le cas, des m circuits à retard $301a_i$ à $301m_i$) est lui-même actif. On obtient ainsi une sommation binaire, et l'amplificateur 403i qui suit cet étage 402i est plus simple puisque deux niveaux de sortie lui suffisent et qu'il n'a donc plus besoin d'être à amplification continue dans une gamme dynamique déterminée.

La réception et le traitement ultérieurs des signaux ainsi émis (dans l'un ou l'autre mode de réalisation) sont de type connu (voir notamment le document "IEEE Trans. on UFFC" déjà cité) et ne sont donc pas décrits ici.

## Revendications

1. Appareil d'examen de milieux par échographie ultrasonore comprenant un réseau de n transducteurs ultrasonores (10a, 10b, 10c,..., 10i,..., 10n) associé à un étage (20) d'émission des signaux d'exploration du milieu et à un étage (30) de réception et traitement des signaux échographiques renvoyés vers lesdits transducteurs par les obstacles rencontrés dans le milieu exploré, caractérisé en ce que ledit étage d'émission comprend des moyens de focalisation de m faisceaux ultrasonores émis simultanément, sous la forme de n modules d'émission (200a,..., 200i,... 200n) comprenant eux-mêmes chacun, et

   par exemple le i-ième, m générateurs de signaux en parallèle ($201a_i$, $201b_i$, $201c_i$,..., $201m-1_i$, $201m_i$) correspondant à des fronts d'onde sphériques de même amplitude, un étage (202i) de combinaison des m signaux ainsi engendrés pour la superposition de m lois de focalisation distinctes, et un amplificateur (203i) prévu pour fournir le signal combiné amplifié au transducteur correspondant au module d'émission considéré.

2. Appareil d'examen de milieux par échographie ultrasonore comprenant un réseau de n transducteurs ultrasonores associé à un étage d'émission des signaux d'exploration du milieu et à un étage de réception et traitement des signaux échographiques renvoyés vers lesdits transducteurs par les obstacles rencontrés dans le milieu exploré, caractérisé en ce que ledit étage d'émission comprend des moyens de focalisation de m faisceaux ultrasonores émis simultanément, sous la forme de n modules d'émission comprenant eux-mêmes chacun, et par exemple le i-ième, un générateur de signal, suivi, pour la superposition de m lois de focalisation distinctes à partir d'un signal correspondant à un front d'onde sphérique d'amplitude déterminée, de m circuits à retard en parallèle, un étage de combinaison des m signaux ainsi engendrés, et un amplificateur prévu pour fournir le signal combiné amplifié au transducteur correspondant au module d'émission considéré.

3. Appareil selon l'une des revendications 1 et 2, caractérisé en ce que les n étages de combinaison (402) prévus dans les n modules d'émission sont des circuits OU-logiques, et en ce que les n amplificateurs (403) sont à deux niveaux de sortie.

4. Appareil selon l'une des revendications 1 et 2, caractérisé en ce que les n étages de combinaison prévus dans les n modules d'émission sont des sommateurs à m entrées, et en ce que les n amplificateurs sont à amplification continue dans toute la gamme dynamique concernée.

**Patentansprüche**

1. Untersuchungsgerät von Medien mittels Ultraschall-Echographie mit einem Netz von n Ultraschall-Transducern (10a, 10b, 10c, ..., 10i, ...10n), kombiniert mit einer Stufe (20) zum Senden der Medien-Untersuchungssignale und einer Stufe (30) zum Empfang und der Verarbeitung der von den in dem untersuchten Medium begegneten Hindernissen zu den besagten Transducern zurückgeworfenen echographischen Signale, dadurch gekennzeichnet, daß die besagte Sendestufe Mittel zum Fokussieren von m simultan gesandten Ultraschallstrahlen enthält, in der Form von n Sendemodulen (200a, ..., 200i, ..., 200n), selbst, und z.B. das i-te, jeweils versehen mit m parallelen Signalgeneratoren ($201a_i$, $201b_i$, $201c_i$ ..., $200m\text{-}1_i$, $200m_i$) entsprechend sphärischen Wellenfronten selber Amplitude, einer Stufe (202i) zum Kombinieren der so erzeugten m Signale zum Übereinanderschichten von m gesonderten Fokussierungsgesetzen, und einem Verstärker (203i), vorgesehen, um das verstärkte kombinierte Signal an den dem betrachteten Sendemodul entsprechenden Transducer zu liefern.

2. Untersuchungsgerät von Medien mittels Ultraschall-Echographie mit einem Netz von n Ultraschall-Transducern, kombiniert mit einer Stufe zum Senden der Medien-Untersuchungssignale und einer Stufe zum Empfang und der Verarbeitung der von den in dem untersuchten Medium begegneten Hindernissen zu den besagten Transducern zurückgeworfenen echographischen Signale, dadurch gekennzeichnet, daß die besagte Sendestufe Mittel zum Fokussieren von m simultan gesandten Ultraschallstrahlen enthält, in der Form von n Sendemodulen, selbst, und z.B. das i-te, jeweils versehen mit einem Signalgenerator, gefolgt, zum Übereinanderschichten von m gesonderten Fokussierungsgesetzen, ausgehend von einem Signal entsprechend einer sphärischen Wellenfront bestimmter Amplitude, von m parallelen Verzögerungsschaltungen, einer Stufe zum Kombinieren der so erzeugten m Signale und einem Verstärker, vorgesehen, um das verstärkte kombinierte Signal an den dem betrachteten Sendemodul entsprechenden Transducer zu liefern.

3. Untersuchungsgerät nach einem der Ansprüche 1 oder 2, dadurch gekennzeichnet, daß die n Verbindungsstufen (402), vorgesehen in den n Sendemodulen, logische ODER-Schaltungen sind, und daß die n Verstärker (403) zwei Ausgangsebenen haben.

4. Untersuchungsgerät nach einem der Ansprüche 1 oder 2, dadurch gekennzeichnet, daß die n Verbindungsstufen, vorgesehen in den n Sendemodulen, Summierer mit m Eingängen sind, und daß die n Verstärker kontinuierliche Verstärker im gesamten betreffenden Dynamikbereich sind.

**Claims**

1. An apparatus for the examination of media by ultrasonic echography, comprising an array of n ultrasonic transducers (10a, 10b, 10c, ..., 10i, ...10n) which are associated with a stage (20) for the emission of signals for scanning the medium and with a stage (30) for receiving and processing echographic signals returned to said transducers by the obstacles encountered in the medium scanned, characterized in that said emission stage includes means for focusing m simultaneously emitted ultrasonic beams, which means consist of n emission modules (200a, ..., 200i, ..., 200n), each of which itself includes, for example the ith, m signal generators in parallel ($201a_i$, $201b_i$, $201c_i$, ..., $201m\text{-}1_i$, $201m_i$), corresponding to leading edges of spherical waves of the same amplitude, a stage (202i) for combining the m signals thus generated in order to superpose m distinct focusing rules, and an amplifier (203i) for applying the amplified combined signal to the transducer corresponding to the relevant emission module.

2. An apparatus for the examination of media by ultrasonic echography, comprising an aray of n ultrasonic transducers which are associated with a stage for the emission of signals for scanning the medium and with a stage for receiving and processing echographic signals returned tot said transducers by the obstacles encountered in the medium scanned, characterized in that said emission stage includes means for focusing m simultaneously emitted ultrasonic beams, which means consist of n emission modules, each of which itself includes, for example the ith, a signal generator which is succeeded, in order to superpose m distinct focusing rules on the basis of a sigal; corresponding to a leading edge of spherical wave of given amplitude, by m delay circuits in parallel, a stage for combining the m signals thus generated, and an amplifier for applying the amplified combined signal to the transducer corresponding to the relevant emission module.

3. An apparatus as claimed in one of the Claims 1 and 2, characterized in that the n combination stages (402) provided in the n emission modules are logic OR-circuits and that the n amplifiers have two output levels.

4. An apparatus as claimed in one of the Claims 1 and 2, characterized in that the n combination stages provided in the n emission modules are m-input summing devices and that the n amplifiers have a continuous gain throughout the relevant dynamic range.

FIG.1

FIG.2

FIG.3

FIG.4